(19) Europäisches Patentamt
European Patent Office
Office européen des brevets

(11) **EP 2 649 735 B1**

(12) **FASCICULE DE BREVET EUROPEEN**

(45) Date de publication et mention de la délivrance du brevet:
**18.07.2018 Bulletin 2018/29**

(21) Numéro de dépôt: **11811043.6**

(22) Date de dépôt: **07.12.2011**

(51) Int Cl.:
*H04B 7/08* *(2006.01)* *H04B 7/04* *(2017.01)*

(86) Numéro de dépôt international:
**PCT/FR2011/052894**

(87) Numéro de publication internationale:
**WO 2012/076813 (14.06.2012 Gazette 2012/24)**

(54) **DISPOSITIF DE RÉCEPTION DE SIGNAUX**

VORRICHTUNG ZUM EMPFANGEN VON SIGNALEN

DEVICE FOR RECEIVING SIGNALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2010 FR 1060241**

(43) Date de publication de la demande:
**16.10.2013 Bulletin 2013/42**

(73) Titulaire: **Thomson Licensing**
**92130 Issy-les-Moulineaux (FR)**

(72) Inventeurs:
• **ROBERT, Jean-Luc**
**F-92443 Issy Les Moulineaux cedex (FR)**
• **LOUZIR, Ali**
**F-92443 Issy Les Moulineaux (FR)**
• **LO HINE TONG, Dominique**
**F-92443 Issy Les Moulineaux (FR)**
• **LE NAOUR, Jean-Yves**
**F-92443 Issy-les-moulineaux (FR)**

(74) Mandataire: **Novagraaf Technologies**
**12 Place des Halles Saint Louis**
**56100 Lorient (FR)**

(56) Documents cités:
WO-A1-01/28036    DE-A1-102008 047 977
GB-A- 2 281 007    US-B1- 6 438 389

## Description

Domaine technique

La présente invention concerne l'émission et la réception de signaux dans un système de transmission sans fil multi-antennes du type MIMO (pour Multiple Input Multiple Output en langue anglaise). La présente invention s'applique plus particulièrement aux réseaux domestiques multimédia à haut débit.

Art Antérieur

Le développement croissant des dispositifs multimédias numériques a fait apparaitre le concept de réseau domestique (ou Home Network en langue anglaise) assurant la distribution simultanée de multiples flux de données, tels que des flux vidéo HD (Haute Définition), des flux audio, des flux de données informatiques, en n'importe quel point de l'environnement domestique. Un tel réseau, dont la structure est tributaire de la distribution des pièces du bâtiment (appartement, maison avec ou sans étages,...) dans lequel il est installé, peut être déployé à partir de différentes technologies telles que le câble, le courant porteur en ligne (CPL), la fibre optique ou les dispositifs sans fil de type WiFi répondant aux standards 802.11a/b/g ou 11n. Ce dernier standard autorise l'emploi de la technologie MIMO qui est une technique multi-antennes permettant d'améliorer les performances de la transmission tant en termes de débit que de robustesse dans les environnements dominés par les interférences.

La technologie MIMO consiste à émettre ou recevoir des signaux en utilisant une pluralité de canaux de transmission ayant des caractéristiques différentes pour obtenir des signaux indépendants et augmenter ainsi la probabilité que l'un au moins des signaux ne soit pas affecté par un évanouissement. On parle alors de diversité spatiale ou diversité d'antenne lorsque le système utilise plusieurs antennes d'émission et/ou réception. Cette diversité contribue à améliorer le gain MIMO d'une part en atténuant les interférences dues aux multitrajets et d'autre part en augmentant le débit de transmission, la fiabilité du système et la zone de couverture.

La plupart des systèmes MIMO utilisent le standard 802.11n et une majorité de produits du marché repose sur des liaisons de type MIMO 2x2, c'est-à-dire un système comprenant, coté émission, 2 émetteurs et, coté réception, 2 récepteurs. Chaque émetteur et chaque récepteur est raccordé à une antenne omnidirectionnelle qui lui est propre. Chaque émetteur peut transmettre un flux de données unique pour augmenter le débit global ou le même flux que l'autre émetteur pour augmenter la redondance et ainsi améliorer la réception avec toutefois un débit plus faible. On peut augmenter la diversité en émission ou en réception en augmentant le nombre d'antennes afin d'augmenter les performances de l'émission ou la réception.

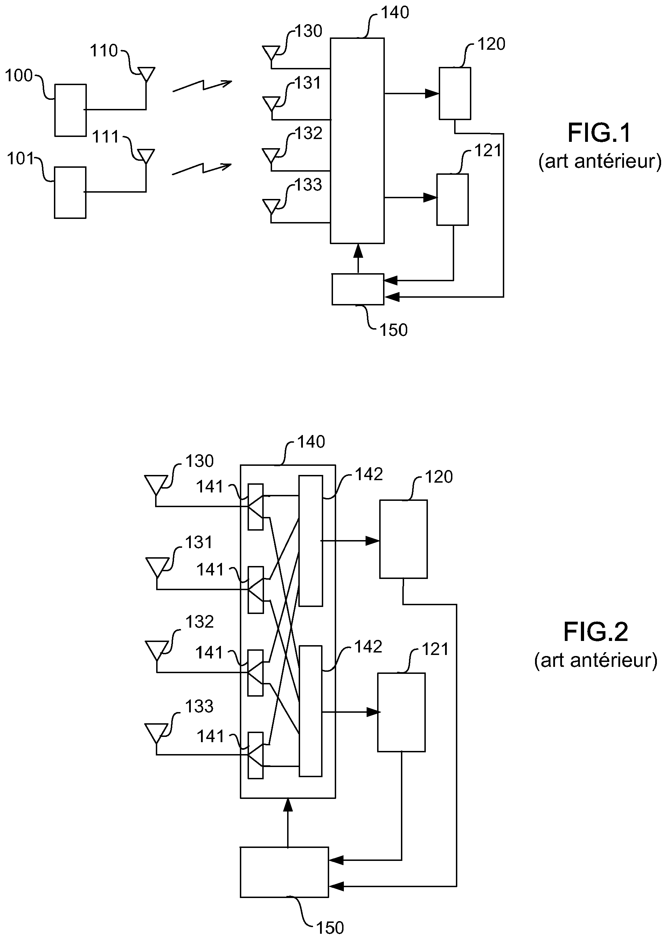

Un exemple de système MIMO 2x2 avec diversité d'ordre 2 en réception est illustré par la figure 1. Le système comprend, coté émission, deux chaînes d'émission 100 et 101 raccordées chacune à une antenne omnidirectionnelle, respectivement 110 et 111, et coté réception, deux chaînes de réception 120 et 121 raccordées à quatre antennes omnidirectionnelles, 130 à 133, via des moyens de commutation 140. Les moyens de commutation sont destinés à associer à chaque chaîne de réception 120 ou 121 une antenne parmi les 4 antennes 130 à 133 selon un schéma de commutation sélectionné par des moyens de contrôle 150. Le schéma de commutation est sélectionné parmi une pluralité de schémas de commutation d'une matrice de commutation en fonction d'un critère représentatif de la qualité de la réception des signaux par les chaînes de réception 120 et 121.

Si les antennes 130 à 133 sont aussi raccordées par les moyens de commutation 23 à des chaînes d'émission (non représentées sur la figure 1), le schéma de commutation sélectionné pour la réception peut également être employé pour relier les chaînes d'émission aux antennes 130 à 133.

Les antennes étant omnidirectionnelles, elles émettent ou reçoivent des signaux dans toutes les directions et les chaînes de réception sont donc soumises à de nombreuses interférences venant de toutes les directions. En émission, elles créent également beaucoup d'interférences pour les autres dispositifs voisins. Cela nuit aux performances globales du système MIMO. Ainsi, pour limiter les problèmes dus aux interférences et améliorer la qualité du signal émis et/ou reçu, il est aussi connu d'utiliser des techniques connues sous le terme anglais « beam forming » (pour « mise en forme du faisceau »). Une technique de ce type est décrite dans le brevet US 6,438,389.

Un but de l'invention est de proposer un dispositif de réception ou d'émission/ réception de signaux dans un environnement MIMO qui, en réception, soit moins affecté par les interférences.

Dans le système MIMO 2x2 de la figure 2, la matrice de commutation comporte $C_4^2 = 6$ schémas de commutation. Chaque schéma de commutation est testé afin de déterminer celui qui permet la meilleure réception des signaux transmis par les antennes d'émission 110 et 111. Ceci implique un temps de traitement relativement long.

Ce temps de traitement augmente avec le rang du système MIMO. Si l'on considère, par exemple, un système MIMO 4x4 avec un degré de diversité d'ordre 2 en réception, utilisant 8 antennes, chaque chaîne de réception doit pouvoir choisir une antenne parmi les 8. Si l'on considère toutes les combinaisons de 4 antennes parmi 8, on aboutit à $C_8^4 = 70$ schémas de commutation possibles. Ceci conduit clairement à un temps de traitement incompatible avec une gestion dynamique du dispositif d'antennes en fonction des variations de l'environnement et plus spécifiquement en milieu domestique riche en trajets multiples.

Un autre but de la présente invention est de proposer un dispositif multi-antennes de réception ou d'émission/réception permettant de réduire ce temps de traitement.

Par ailleurs, les moyens de commutation comportent des éléments de commutation engendrant des pertes dans la réception des signaux par les chaînes de réception 120 et 121. Par exemple, dans le cas du système MIMO 2x2 de la figure 2, les moyens de commutation comprennent par exemple 4 commutateurs unipolaires à deux directions (ou single-pole double-throw switch en langue anglaise) 141 et 2 commutateurs unipolaires à quatre directions (ou single-pole four-throw switch en langue anglaise) 142 comme illustré à la figure 2.

Les commutateurs 141 et 142 engendrent respectivement une perte d'environ 0,5 dB et 2 dB à 6 GHz.

Un autre but de l'invention est de proposer un dispositif multi-antennes de réception ou d'émission/réception permettant d'utiliser un nombre réduit de commutateurs dans les moyens de commutation ou d"utiliser des commutateurs engendrant moins de pertes.

### Résumé de l'invention

Selon l'invention, le dispositif de réception d'un système MIMO est équipé d'une pluralité d'antennes directives couvrant chacune un secteur angulaire qui lui est propre, les secteurs angulaires des antennes étant sensiblement non recouvrants et formant ensemble un secteur angulaire global de 360 degrés.

A cet effet, la présente invention concerne un dispositif de réception de signaux dans un système MIMO comprenant:

- m chaînes de réception de signal, avec m supérieur à 1 ;
- un système antennaire ;
- des moyens de commutation pour associer à chaque chaîne de réception de signal une antenne parmi les n antennes selon un schéma de commutation sélectionné par des moyens de contrôle, le schéma de commutation étant sélectionné parmi une pluralité de schémas de commutation d'une matrice de commutation en fonction d'un critère représentatif de la qualité de la réception des signaux par lesdites chaînes de réception de signal,

caractérisé en ce que le système antennaire est constitué soit par n antennes directives n > m, chaque antenne étant apte à recevoir des signaux dans un secteur angulaire qui lui est propre, les secteurs angulaires propres des n antennes étant sensiblement non recouvrants entre eux et formant ensemble un secteur angulaire global de 360 degrés, soit par une antenne multi-secteur à n secteurs angulaires n > m, les n secteurs angulaires étant sensiblement non-recouvrant entre eux et ayant chacun un accès distinct.

Selon un mode de réalisation particulier, la matrice de commutation comporte p schémas de commutation, avec

$$p < \frac{n!}{m!\,(n-m)\,!},$$

et les moyens de contrôle commandent les moyens de commutation de manière à sélectionner un desdits p schémas de commutation en fonction dudit critère de qualité.

L'utilisation d'antennes directives couvrant chacune un secteur angulaire propre ou d'une antenne multi-secteur permet de réduire le nombre de schémas de commutation dans la matrice de commutation et de le rendre inférieur à $C_n^m$. En effet, dans un contexte de milieu domestique, il existe toujours un trajet principal et donc une direction de propagation privilégiée. Il en résulte que la probabilité que des secteurs opposés contribuent au multi-trajet MIMO est faible. En d'autres termes, si un premier secteur reçoit correctement des signaux MIMO, il y a une faible probabilité pour que le secteur opposé reçoive également correctement les signaux MIMO. Les schémas de commutation correspondant à ces cas de figure peuvent donc être supprimés de la matrice de commutation.

Selon un mode de réalisation particulier, la matrice de commutation comprend au moins les n schémas de commutation sélectionnant chacun m antennes ayant des secteurs angulaires consécutifs. Dans ce mode de réalisation, la matrice de commutation comprend un nombre limité de schémas de commutation, à savoir m schémas de commutation au lieu de $C_n^m$, ce qui permet d'obtenir un temps de traitement très réduit pour la gestion dynamique des antennes.

Selon un autre mode de réalisation, la matrice de commutation comprend en outre les schémas de commutation sélectionnant chacun m antennes ayant leurs secteurs angulaires compris dans un ensemble de m+1 secteurs angulaires consécutifs, avec au plus deux antennes parmi les m antennes sélectionnées ayant des secteurs angulaires opposés. Dans ce mode de réalisation, la matrice de commutation comprend un plus grand nombre de schémas de commutation, qui augmente le temps de traitement mais permet de répondre à un plus grand nombre de configurations multi-trajets.

En variante, la matrice de commutation comprend, en plus des n schémas de commutation sélectionnant chacun m antennes avec des secteurs angulaires consécutifs, les schémas de commutation sélectionnant chacun m antennes ayant leurs secteurs angulaires compris dans un ensemble de m+2 secteurs angulaires consécutifs, les schémas de commutation sélectionnant des antennes ayant des secteurs angulaires opposés étant exclus de ladite matrice de commutation.

La réduction du nombre de schémas de commutation dans la matrice de commutation $(< C_n^m)$ permet, outre la réduction du temps de traitement pour la sélection dynamique des antennes, également l'utilisation d'un nombre réduit d'éléments de commutation dans les moyens de commutation et/ou l'utilisation d'éléments de commutation

Selon un mode de réalisation préféré, les moyens de contrôle comprennent des moyens additionnels pour, lorsque le critère de qualité de réception pour au moins l'une des chaînes de réception de signal n'est plus respecté, remplacer le schéma de commutation sélectionné par lesdits moyens de contrôle par un autre schéma de commutation prédéfini de la matrice de commutation.

On détermine ainsi à l'avance, pour chaque schéma de commutation, un schéma de commutation de remplacement lorsque la qualité de réception du schéma de commutation sélectionné par les moyens de contrôle n'est plus bonne. Le remplacement peut donc s'effectuer instantanément et le temps de traitement est alors réduit à son minimum.

Selon un mode de réalisation particulier, les secteurs angulaires des antennes ont des tailles identiques égales à 360/n degrés. Le domaine de couverture du dispositif est ainsi découpé en secteurs égaux.

Selon un mode de réalisation particulier, les n antennes sont formées par une antenne multi-secteurs à n secteurs angulaires, chaque secteur étant apte à être relié à une chaîne de réception via desdits moyens de commutation.

L'invention est aussi applicable à l'émission de signaux dans un dispositif d'émission et réception de signaux d'un système MIMO. Dans ce cas, l'invention concerne un dispositif d'émission et de réception de signaux dans un système MIMO comprenant :

- un dispositif de réception tel que défini précédemment, et
- m chaînes d'émission de signal, chaque chaîne d'émission de signal étant associée à une chaîne de réception de signal,

dans lequel les moyens de commutation sont en outre aptes à associer à chaque chaîne d'émission une antenne parmi les n antennes selon un schéma de commutation sélectionné par les moyens de contrôle, le schéma de commutation étant sélectionné parmi une pluralité de schémas de commutation d'une matrice de commutation en fonction d'un critère représentatif de la qualité de la réception des signaux par lesdites chaînes de réception de signal associées.

Dans ce cas, on considère que les canaux de transmission du système MIMO sont réciproques. La sélection des antennes pour l'émission de signaux MIMO est alors réalisée en utilisant la même matrice de commutation

mutation

Brève description des figures

L'invention sera mieux comprise, et d'autres buts, détails, caractéristiques et avantages apparaîtront plus clairement au cours de la description explicative détaillée qui va suivre, en se référant ci-dessous aux dessins annexés, lesquels représentent :

- la figure 1, un schéma illustrant un système MIMO 2x2 avec diversité d'ordre 2 en réception selon l'art antérieur,
- la figure 2, un schéma du dispositif de réception du système MIMO de la figure 1 ;
- la figure 3, un schéma d'un dispositif de réception d'un système MIMO 2x2 d'ordre 2 en réception conforme à l'invention ;
- la figure 4, un schéma illustrant les schémas de commutation d'une matrice de commutation utilisable par le dispositif de la figure 3 ;
- la figure 5, un schéma d'un dispositif de réception d'un système MIMO 4x4 d'ordre 2 en réception conforme à l'invention ;
- la figure 6, un schéma illustrant les schémas de commutation d'une matrice de commutation utilisable par le dispositif de la figure 5 ;
- les figures 7 et 8, des schémas illustrant le remplacement de schémas de commutation de la matrice de commutation de la figure 6 par d'autres schémas de commutation de la matrice ;
- la figure 9, un schéma d'un dispositif de réception d'un système MIMO 3x3 d'ordre 2 en réception conforme à l'invention ;
- la figure 10, un schéma illustrant les schémas de commutation d'une matrice de commutation utilisable par le dispositif de la figure 9 ; et
- la figure 11, un schéma illustrant le remplacement d'un schéma de commutation de la matrice de commutation de la figure 10 par un autre schéma de commutation de la matrice.

Description détaillée de modes de réalisation

L'invention sera décrite dans le cadre d'un dispositif de réception multi-antennes d'un système MIMO.

L'invention est plus particulièrement décrite à travers différents exemples de dispositifs de réception, à savoir un dispositif de réception d'un système MIMO 2x2 d'ordre 2 en réception, un dispositif de réception d'un système MIMO 4x4 d'ordre 2 en réception et un dispositif de réception d'un système MIMO 3x3 d'ordre 2 en réception.

Système MIMO 2x2 d'ordre 2 en réception

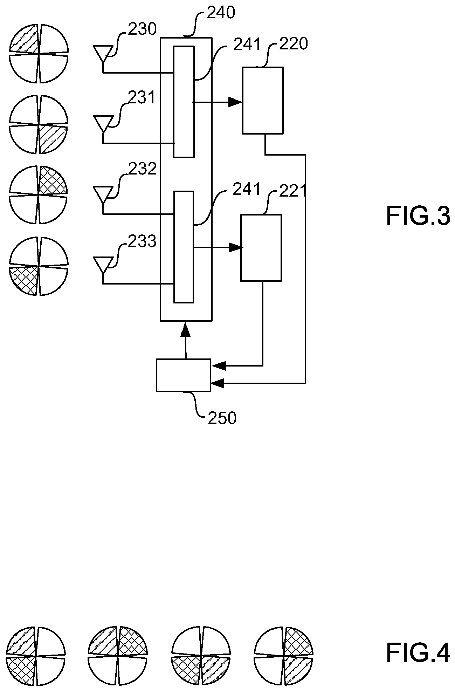

La figure 3 représente un dispositif de réception d'un système MIMO 2x2 d'ordre 2 en réception.

Le dispositif de réception comprend deux chaînes de réception 220 et 221, quatre antennes 230 à 233 et des moyens de commutation 240 pour associer à chaque chaîne de réception une antenne parmi les quatre antennes 230 à 233. Les moyens de commutation sont commandés par des moyens de contrôle 250 sélectionnant un schéma de commutation parmi une pluralité de schémas de commutation d'une matrice de commutation en fonction d'un critère représentatif de la qualité de la réception des signaux par les chaînes de réception 220 et 221. Ce critère est par exemple une mesure de puissance reçue ou RSSI (pour Received Signal Strength Information en langue anglaise) ou une mesure de rapport signal sur bruit.

Selon l'invention, les antennes 230 à 233 sont des antennes directives, à savoir qu'elles couvrent chacune un secteur angulaire particulier d'environ 90°.Dans l'exemple montré à la figure 3, l'antenne 230 couvre le secteur 0°-90° (sens horaire), l'antenne 231 couvre le secteur 180°-270°, l'antenne 232 couvre le secteur 90°-180° et l'antenne 233 couvre le secteur 270°-360°. Les antennes directives 230 et 231 couvrent des secteurs opposés et sont raccordées par un commutateur unipolaire à deux directions 241 à la chaîne de réception 220. De même, les antennes directives 232 et 233 couvrent des secteurs opposés et sont raccordées par un commutateur unipolaire à deux directions 241 à la chaîne de réception 221. Les secteurs angulaires aptes à être associés à la chaîne de réception 220 sont hachurés et les secteurs angulaires aptes à être associés à la chaîne de réception 221 sont quadrillés.

Selon un mode de réalisation particulier, les antennes 230 à 233 sont constituées par une antenne multi-secteur unique ayant 4 secteurs angulaires de 90° sensiblement non recouvrants et ayant 4 accès secteur distincts.

La matrice de commutation comporte avantageusement un nombre réduit de schémas de commutation permettant un temps de traitement réduit pour la sélection dynamique des antennes.

Cette matrice de commutation comporte par exemple les 4 schémas de commutation montrés à la figure 4, à savoir :

- le schéma de commutation associant l'antenne 230 à la chaîne de réception 220 et l'antenne 233 à la chaîne de réception 221 ;
- le schéma de commutation associant l'antenne 230 à la chaîne de réception 220 et l'antenne 232 à la chaîne de réception 221 ;
- le schéma de commutation associant l'antenne 231 à la chaîne de réception 220 et l'antenne 233 à la chaîne de réception 221 ; et
- le schéma de commutation associant l'antenne 231 à la chaîne de réception 220 et l'antenne 232 à la chaîne de réception 221.

Avantageusement, les antennes associées à la chaîne de réception 220 et les antennes associées à la chaîne de réception 221 ont des polarisations orthogonales pour améliorer la décorrélation des signaux reçus dans des secteurs adjacents.

Dans ce mode de réalisation, les moyens de contrôle 250 sélectionnent pour la chaîne de réception 220 l'antenne permettant la meilleure réception parmi les antennes correspondant aux secteurs hachurés et pour la chaîne de réception 221 la meilleure antenne parmi les antennes correspondant aux secteurs quadrillés.

Pour cela, pendant une phase de recherche, les moyens de contrôle testent successivement les 4 schémas de commutation de la matrice de commutation et mémorise pour chacun d'entre eux une mesure de puissance reçue et/ou une mesure de rapport signal sur bruit. A la fin des mesures, les moyens de contrôle sélectionnent le schéma de commutation optimal. Ensuite, la puissance reçue et/ou le rapport signal sur bruit est ou sont mesuré(s) périodiquement sur chaque chaîne de réception, par exemple toutes les 100 ms. Lorsque l'une des mesures tombe en dessous d'une valeur seuil prédéfinie, on relance une phase de recherche.

Dans ce mode de réalisation, l'utilisation d'un unique commutateur unipolaire à deux directions 241 pour connecter chaque chaîne de réception à une antenne a pour avantage de réduire les pertes à 0,5 dB, à comparer au 2,5 dB du dispositif de la figure 2.

Système MIMO 4x4 d'ordre 2 en réception

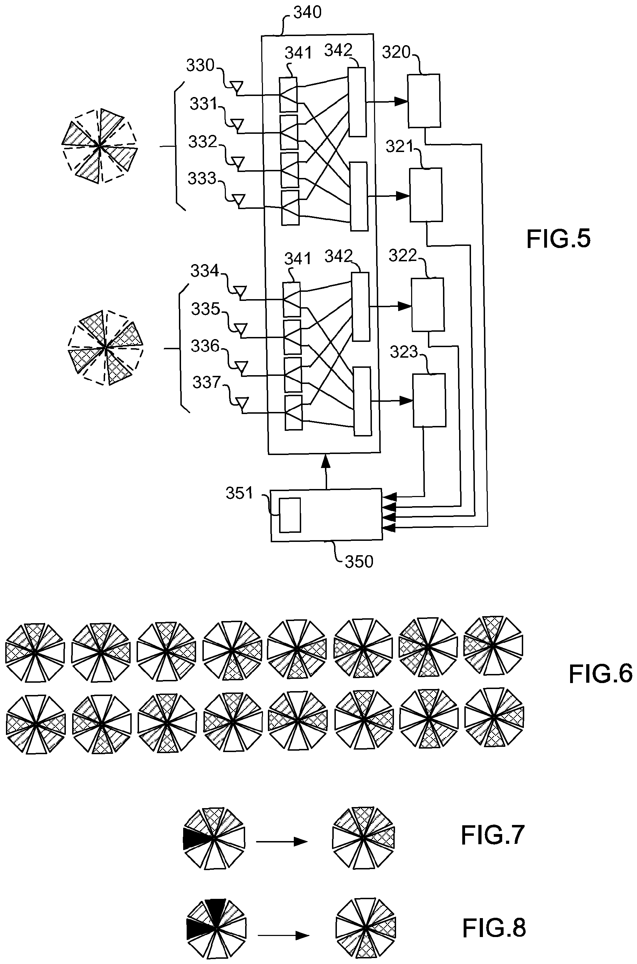

La figure 5 représente un dispositif de réception d'un système MIMO 4x4 d'ordre 2 en réception.

Le dispositif de réception comprend quatre chaînes de réception 320 à 323, huit antennes 330 à 337 et des moyens de commutation 340 pour associer à chaque chaîne de réception une antenne parmi les quatre antennes 330 à 337. Les moyens de commutation 340 sont commandés par des moyens de contrôle 350 qui sélectionnent un schéma de commutation parmi une pluralité de schémas de commutation d'une matrice de commutation en fonction d'un critère représentatif de la qualité de la réception des signaux par les chaînes de réception 320 et 323.

Les antennes 330 à 337 sont directives et couvrent chacune un secteur angulaire particulier d'environ 45°. Dans l'exemple illustré à la figure 5, l'antenne 330 couvre le secteur 0°-45°, l'antenne 331 couvre le secteur 90°-135°, l'antenne 332 couvre le secteur 180°-225° et l'antenne 333 couvre le secteur 270°-315°, l'antenne 334 couvre le secteur 45°-90°, l'antenne 335 couvre le secteur 135°-180°, l'antenne 336 couvre le secteur 225°-270° et l'antenne 337 couvre le secteur 315°-360°.

Les chaînes de réception 320 et 321 sont raccordées sélectivement aux antennes directives 330 à 333 via les moyens de commutation 340. De même, les chaînes de réception 322 et 323 sont raccordées sélectivement aux antennes directives 334 à 337 via les moyens de commutation 340.

Les moyens de commutation 340 comportent quatre commutateurs unipolaires à deux directions 341 et deux commutateurs unipolaires à quatre directions 342 pour le raccordement des antennes 330 à 333 aux chaînes de réception 320 et 321. Ils comportent quatre autres commutateurs unipolaires à deux directions 341 et deux autres commutateurs unipolaires à quatre directions 342 pour le raccordement des antennes 334 à 337 aux chaînes de réception 322 et 323.

Dans la figure 5, les secteurs angulaires pouvant être associés aux chaînes de réception 320 et 321 sont hachurés et les secteurs angulaires pouvant être associés aux chaînes de réception 322 et 323 sont quadrillés.

Selon un mode de réalisation particulier, les antennes 330 à 337 sont constituées par une antenne multi-secteur unique ayant 8 secteurs angulaires de 45° sensiblement non recouvrants et ayant 8 accès secteur distincts.

La matrice de commutation comporte avantageusement un nombre réduit de schémas de commutation permettant un temps de traitement réduit par la sélection dynamique des antennes.

Cette matrice de commutation comporte les 16 schémas de commutation montrés à la figure 6, dont 8 schémas de commutation sélectionnant chacun 4 antennes de réception ayant des secteurs angulaires consécutifs et 8 schémas de commutation sélectionnant chacun 4 antennes de réception ayant leurs secteurs angulaires compris dans un ensemble de 5 secteurs angulaires consécutifs, avec au plus deux antennes parmi les 4 antennes sélectionnées ayant des secteurs angulaires opposés.

Avantageusement, les antennes associées aux chaînes de réception 320 et 321 et les antennes associées aux chaînes de réception 322 et 323 ont des polarisations orthogonales pour améliorer la décorrélation des signaux reçus dans des secteurs adjacents.

Dans ce mode de réalisation, les moyens de contrôle 350 sélectionnent pour les chaînes de réception 320 et 321 les deux meilleures antennes parmi les antennes correspondant aux secteurs hachurés et pour les chaînes de réception 322 et 323 les deux meilleures antennes parmi les antennes correspondant aux secteurs quadrillés.

Pour cela, pendant une phase de recherche, les moyens de contrôle 350 testent successivement les 16 schémas de commutation de la matrice de commutation et mémorise pour chacun d'entre eux une mesure de puissance reçue et/ou une mesure de rapport signal sur bruit. A la fin des mesures, les moyens de contrôle sélectionnent le schéma de commutation optimal. Ensuite, la puissance reçue et/ou le rapport signal sur bruit est ou sont mesuré(s) périodiquement sur chaque chaîne de réception. Lorsque l'une des mesures tombe en dessous d'une valeur seuil prédéfinie, on relance une phase de recherche.

La durée de cette phase d'initialisation peut toutefois être longue lorsque la matrice de commutation comportant un grand nombre de schémas de commutation. On prévoit alors avantageusement de définir à l'avance, pour chaque schéma de commutation, un schéma de commutation dit de remplacement venant le remplacer lorsque le critère de qualité de réception pour au moins l'une des chaînes de réception n'est plus respecté, c'est-à-dire lorsque la mesure de puissance reçue et/ou la mesure de rapport signal sur bruit de l'une des chaînes de réception tombent en dessous des valeurs seuil prédéfinies.

Cette opération de remplacement est illustrée par les figures 7 et 8. La figure 7 illustre le cas où le critère de qualité pour l'une des chaînes de réception n'est plus respecté. Le secteur angulaire de l'antenne associée à cette chaîne de réception est représenté en noir sur la figure. Dans ce mode de réalisation, on remplace le schéma de commutation courant par un schéma de commutation de remplacement prédéfini de la matrice de commutation n'utilisant pas la chaîne de réception sous-optimale. Cette opération de remplacement est réalisée au moyen d'une table à consulter 351 (ou LUT pour Look UP Table en langue anglaise) pilotée un algorithme de remplacement. Cette LUT est stockée dans les moyens de contrôle. Dans l'exemple de la figure 8, on remplace le schéma de commutation courant par le schéma de commutation dans lequel le secteur en noir est remplacé par son dual opposé.

La figure 8 illustre le cas où le critère de qualité pour deux chaînes de réception n'est plus respecté. Dans ce cas, on remplace le schéma de commutation courant par un schéma de commutation de remplacement prédéfini de la matrice de commutation n'utilisant pas les secteurs défectueux (secteurs en noir).

A noter que l'utilisation d'un unique commutateur unipolaire à deux directions 341 et d'un unique commutateur unipolaire à quatre directions 342 pour connecter chaque chaîne de réception à une antenne permet de limiter les pertes à 2,5 dB. Dans l'art antérieur, on utilise classiquement un commutateur unipolaire à huit directions dont les pertes sont bien supérieures.

Système MIMO 3x3 d'ordre 2 en réception

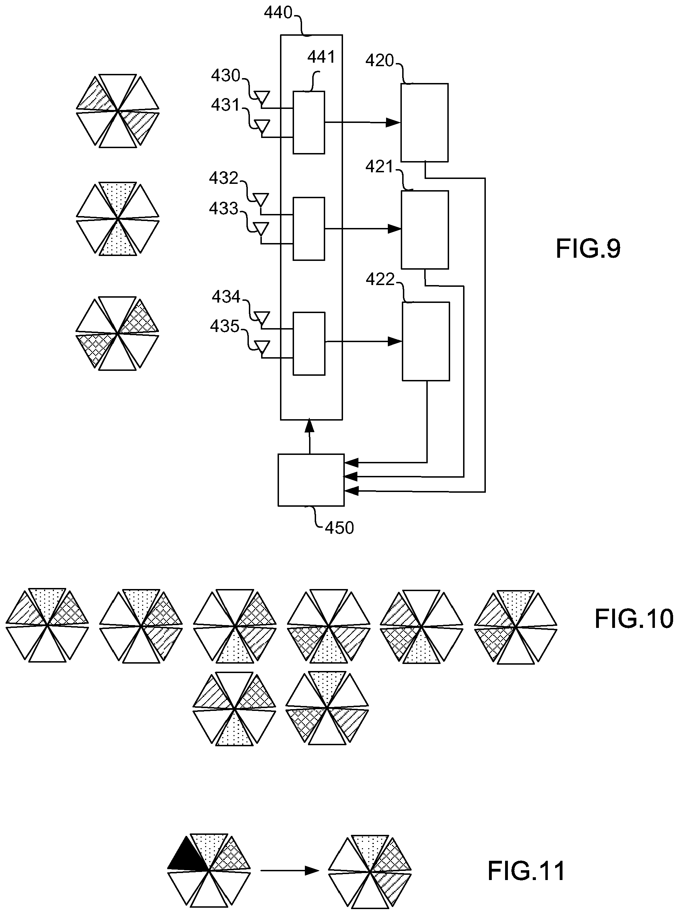

La figure 9 représente un dispositif de réception d'un système MIMO 3x3 d'ordre 2 en réception.

Le dispositif de réception comprend trois chaînes de réception 420, 421 et 422, six antennes de réception, 430 à 435, et des moyens de commutation 440 pour associer à chaque chaîne de réception une antenne parmi les six antennes 430 à 435. Les moyens de commutation sont commandés par des moyens de contrôle 450 sélectionnant un schéma de commutation parmi une pluralité de schémas de commutation d'une matrice de commutation en fonction d'un critère représentatif de la qualité de la réception des signaux par les chaînes de réception 420 à 422.

Les antennes 430 à 233 sont des antennes directives couvrant chacune un secteur angulaire particulier d'environ 60°. Dans l'exemple illustré par la figure 9, l'antenne 430 couvre le secteur 0°-60°, l'antenne 431 couvre le secteur 180°-240°, l'antenne 432 couvre le secteur 60°-120°, l'antenne 433 couvre le secteur 240°-300°, l'antenne 434 couvre le secteur 120°-180° et l'antenne 435 couvre le secteur 300°-360°. Dans la figure, les secteurs des antennes 430 et 431 sont hachurés et représentent les secteurs aptes à être associés à la chaîne de réception 420. Les secteurs des antennes 432 et 433 sont représentés par des points et représentent les secteurs aptes à être associés à la chaîne de réception 421. Les secteurs des antennes 434 et 435 sont quadrillés et représentent les secteurs aptes à être associés à la chaîne de réception 422.

Les 6 antennes 430 à 435 peuvent constituées une seule et même antenne multi-secteur ayant 6 secteurs angulaires de 60° sensiblement non recouvrants et 6 accès secteur distincts.

Les moyens de commutation comprennent trois commutateurs unipolaires à deux directions 441, chacun reliant sélectivement deux antennes à une chaîne de réception qui lui est propre.

La matrice de commutation comporte avantageusement les 8 schémas de commutation montrés à la figure 10, dont 6 schémas de commutation sélectionnant chacun 3 antennes ayant des secteurs angulaires consécutifs et 2 schémas de commutation sélectionnant chacun 3 antennes ayant des secteurs angulaires non contigus.

Dans ce mode de réalisation, les moyens de contrôle 450 sélectionnent, pour les 3 chaînes de réception, la « meilleure » antenne parmi les antennes correspondant aux secteurs hachurés, la « meilleure » antenne parmi les antennes correspondant aux secteurs représentés par des points et la « meilleure » antenne parmi les antennes correspondant aux secteurs quadrillés.

Comme pour les autres systèmes, pendant une phase de recherche, les moyens de contrôle testent successivement les 8 schémas de commutation de la matrice de commutation et mémorise pour chacun d'entre eux une mesure de puissance reçue et/ou une mesure de rapport signal sur bruit. A la fin des mesures, les moyens de contrôle sélectionnent le schéma de commutation optimal. Ensuite, la puissance reçue et/ou le rapport signal sur bruit est ou sont mesuré(s) périodiquement sur chaque chaîne de réception. Lorsque l'une des mesures tombe en dessous d'une valeur seuil prédéfinie, le schéma de commutation est remplacé par un schéma de commutation de remplacement prédéfini.

Cette opération de remplacement est illustrée par la figure 11. Cette figure illustre le cas où le critère de qualité pour l'une des chaînes de réception n'est plus respecté. Le secteur angulaire de l'antenne associée à cette chaîne de réception défectueuse est représenté en noir sur la figure. Dans l'exemple de la figure 11, on remplace le schéma de commutation courant par le schéma de commutation dans lequel le secteur en noir est remplacé par son dual opposé.

A noter que l'utilisation d'un unique commutateur unipolaire à deux directions 441 pour connecter chaque chaîne de réception à une antenne permet de limiter les pertes à 0,5 dB. Dans l'art antérieur, on utilise classiquement un commutateur unipolaire à six directions dont les pertes sont bien supérieures.

L'invention est également applicable à l'émission de signaux dans un dispositif d'émission et réception de signaux d'un système MIMO. Dans ce cas, le dispositif comporte, en plus des moyens décrits précédemment, des chaînes d'émission de signal, chaque chaîne d'émission de signal étant associée à une chaîne de réception de signal. Les moyens de commutation sont en outre aptes à associer à chacune des chaînes d'émission ou des chaînes de réception une antenne parmi les antennes du dispositif selon un schéma de commutation sélectionné par les moyens de contrôle. Dans ce cas, on considère que les canaux de transmission du système MIMO sont réciproques.

Le schéma de commutation sélectionné pour connecter les chaînes d'émission aux antennes et émettre des signaux MIMO est le même que celui employé pour recevoir les signaux MIMO.

L'invention est plus particulièrement applicable dans le cadre du déploiement de réseaux multimédia haut débit domestiques. Les topologies de matrice de commutation proposée ici permettent d'implémenter des solutions d'antennes directives associées aux dispositifs de transmission multi-antennes de type MIMO. Elles permettent d'une part de bénéficier du gain de directivité tout en limitant le risque de perturbation lié aux interférents dans un environnement domestique riche en multitrajets. L'invention contribue à discrétiser l'espace et, de ce fait, ajoute un degré de diversité spatiale par la sectorisation des antennes. Ce concept associe une architecture simplifiée et allège considérablement le processus de sélection du schéma de commutation. La réduction du temps de traitement permet ainsi un contrôle dynamique performant des antennes pour lutter plus efficacement contre les effets néfastes des multi-trajets, des perturbateurs et d'augmenter sensiblement les performances du système en terme de portée et de débit.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1.   Dispositif de réception de signaux dans un système comprenant :

      - m chaînes de réception de signal (220-221 ; 320-323 ; 420-422), avec m supérieur à 1 ;

- un système antennaire (230-233 ; 330-337 ; 430-435) ;

constitué soit par n antennes directives n > m, chaque antenne étant apte à recevoir des signaux dans un secteur angulaire qui lui est propre, les secteurs angulaires propres des n antennes étant sensiblement non recouvrant entre eux et formant ensemble un secteur angulaire global de 360 degrés, soit par une antenne multisecteur à n secteurs angulaires n > m, les n secteurs angulaires étant sensiblement non recouvrant entre eux et formant ensemble un secteur angulaire global de 360 degrés et ayant un accès distinct et

- des moyens de commutation (240 ; 340 ; 440) pour associer à chaque chaîne de réception de signal une antenne parmi les n antennes selon un schéma de commutation sélectionné par des moyens de contrôle (250 ; 350 ; 450), le schéma de commutation étant sélectionné parmi une pluralité de schémas de commutation d'une matrice de commutation en fonction d'un critère représentatif de la qualité de la réception des signaux par lesdites chaînes de réception de signal,

**caractérisé en ce que** chacun des schémas de commutation sélectionne m antennes ayant leurs secteurs angulaires compris dans un ensemble de m+1 secteurs angulaires consécutifs, avec au plus deux antennes parmi les m antennes sélectionnées ayant des secteurs angulaires opposés.

2. Dispositif selon la revendication 1, **caractérisé en ce que** le schéma de commutation est sélectionné parmi une pluralité de p schémas de commutation d'une matrice de commutation avec

$$ p < \frac{n!}{m!\,(n-m)!} , $$

en fonction d'un critère représentatif de la qualité de la réception des signaux par lesdites chaînes de réception de signal.

3. Dispositif selon la revendication 2, dans lequel la matrice de commutation comprend au moins les n schémas de commutation sélectionnant chacun m antennes ayant des secteurs angulaires consécutifs.

4. Dispositif selon la revendication 3, dans lequel la matrice de commutation comprend en outre les schémas de commutation sélectionnant chacun m antennes ayant leurs secteurs angulaires compris dans un ensemble de m+2 secteurs angulaires consécutifs, les schémas de commutation sélectionnant des antennes ayant des secteurs angulaires opposés étant exclus de ladite matrice de commutation.

5. Dispositif selon l'une des revendications précédentes, dans lequel les moyens de contrôle comprennent des moyens additionnels (351) pour, lorsque le critère de qualité de réception pour au moins l'une des chaînes de réception de signal n'est plus respecté, remplacer le schéma de commutation sélectionné par lesdits moyens de contrôle par un autre schéma de commutation prédéfini de la matrice de commutation.

6. Dispositif selon l'une des revendications précédentes dans lequel les secteurs angulaires ont des tailles identiques égales à 360/n degrés.

7. Dispositif selon l'une des revendications précédentes dans lequel les n antennes sont formées par une antenne multi-secteurs à n secteurs angulaires, chaque secteur étant apte à être relié à une chaîne de réception via desdits moyens de commutation.

8. Dispositif d'émission et de réception de signaux dans un système comprenant:

- un dispositif de réception selon l'une des revendications 1 à 7, et
- m chaînes d'émission de signal, chaque chaîne d'émission de signal étant associée à une chaîne de réception de signal,

dans lequel les moyens de commutation sont en outre aptes à associer à chaque chaîne d'émission une antenne parmi les n antennes selon un schéma de commutation sélectionné par les moyens de contrôle, le schéma de commutation étant sélectionné parmi une pluralité de schémas de commutation d'une matrice de commutation en fonction d'un critère représentatif de la qualité de la réception des signaux par lesdites chaînes de réception de signal associées.

9. Dispositif selon l'une quelconque des revendications précédentes **caractérisé en ce que** le système est un système MIMO.

**Patentansprüche**

1. Vorrichtung zum Empfangen von Signalen in einem System, umfassend:

- m Ketten zum Signalempfang (220-221; 320-323; 420-422), mit m größer als 1;
- ein Antennensystem (230-233; 330-337; 430-435);
gebildet entweder durch n Richtantennen n > m, wobei jede Antenne geeignet ist, um Signale in einem ihr eigenen Winkelbereich zu empfangen, wobei die eigenen Winkelbereiche der n Antennen sich untereinander im Wesentlichen nicht überlappen und zusammen einen Gesamtwinkelbereich von 360 Grad bilden, oder durch eine Multisektorenantenne mit n Winkelbereichen n > m, wobei die n Winkelbereiche sich untereinander im Wesentlichen nicht überlappen und zusammen einen Gesamtwinkelbereich von 360 Grad bilden und einen unterschiedlichen Zugang haben und

- Schaltmittel (240; 340; 440), um mit jeder Kette zum Signalempfang eine Antenne unter den n Antennen nach einem durch Kontrollmittel (250; 350; 450) ausgewählten Schaltschema zu verknüpfen, wobei das Schaltschema aus einer Vielzahl von Schaltschemata einer Umschaltmatrix in Abhängigkeit von einem repräsentativen Kriterium der Qualität des Empfangs der Signale durch die besagten Ketten zum Signalempfang ausgewählt wird,

**dadurch gekennzeichnet, dass** jedes der Schaltschemata m Antennen auswählt, die ihre Winkelbereiche innerhalb einer Gesamtheit von m+1 aufeinanderfolgenden Winkelbereichen haben, mit höchstens zwei Antennen unter den m ausgewählten Antennen, die gegenüberliegende Winkelbereiche haben.

2. Vorrichtung nach Anspruch 1, **dadurch gekennzeichnet, dass** das Schaltschema aus einer Vielzahl von p Schaltschemata einer Umschaltmatrix mit

$$p < \frac{n!}{m!(n-m)!}$$

ausgewählt wird, in Abhängigkeit von einem repräsentativen Kriterium der Qualität des Empfangs der Signale durch die besagten Ketten zum Signalempfang.

3. Vorrichtung nach Anspruch 2, in welcher die Umschaltmatrix mindestens die n Schaltschemata umfasst, die jeweils m Antennen auswählen, die aufeinanderfolgende Winkelbereiche haben.

4. Vorrichtung nach Anspruch 3, in welcher die Umschaltmatrix des Weiteren die Schaltschemata umfasst, die jeweils m Antennen auswählen, die ihre Winkelbereiche innerhalb einer Gesamtheit von m+2 aufeinanderfolgenden Winkelbereichen haben, wobei die Schaltschemata, die Antennen mit gegenüberliegenden Winkelbereichen auswählen, aus der besagten Umschaltmatrix ausgeschlossen sind.

5. Vorrichtung nach einem der vorstehenden Ansprüche, in welcher die Kontrollmittel zusätzliche Mittel (351) umfassen, um, wenn das Qualitätskriterium zum Empfang für mindestens eine der Ketten zum Signalempfang nicht mehr respektiert wird, das durch die besagten Kontrollmittel ausgewählte Schaltschema durch ein anderes vorgegebenes Schaltschema der Umschaltmatrix zu ersetzen.

6. Vorrichtung nach einem der vorstehenden Ansprüche, in welcher die Winkelbereiche identische Größen haben, die gleich 360/n Grad betragen.

7. Vorrichtung nach einem der vorstehenden Ansprüche, in welcher die n Antennen durch eine Multisektorenantenne mit n Winkelbereichen gebildet werden, wobei jeder Sektor geeignet ist, um über die besagten Schaltmittel mit einer Empfangskette verbunden zu werden.

8. Vorrichtung zum Senden und zum Empfangen von Signalen in einem System, umfassend:

   - eine Vorrichtung zum Empfang nach einem der Ansprüche 1 bis 7, und
   - m Ketten zur Signalsendung, wobei jede Kette zur Signalsendung mit einer Kette zum Signalempfang verknüpft ist,

   in welcher die Schaltmittel des Weiteren geeignet sind, mit jeder Sendekette eine Antenne unter den n Antennen nach einem durch die Kontrollmittel ausgewählten Schaltschema zu verknüpfen, wobei das Schaltschema aus einer Vielzahl von Schaltschemata einer Umschaltmatrix in Abhängigkeit von einem repräsentativen Kriterium der Qualität des Empfangs der Signale durch die besagten verknüpften Ketten zum Signalempfang ausgewählt wird.

9. Vorrichtung nach einem der vorstehenden Ansprüche, **dadurch gekennzeichnet, dass** das System ein MIMO-System ist.

**Claims**

1. Device for receiving signals in a system comprising:

   - m signal receiver channels (220-221; 320-323; 420-422), where m is greater than 1;
   - an antenna system (230-233; 330-337; 430-435);
   constituted either by n directive antennae n > m, each antenna being able to receive signals in one of its own angular sectors, the own angular sectors of the n antennae essentially not overlapping each other and together forming a total angular sector of 360 degrees, or a multi-sector antenna with n angular sectors n > m, the n angular sectors essentially not overlapping each other and together forming a total angular sector of 360 degrees and having a distinct access and
   - switching means (240; 340; 440) in order to associate with each signal receiver channel an antenna from among n antennae according to a switching schema selected by control means (250; 350; 450), the switching schema being selected from a plurality of switching schemas of a switching matrix according to a criterion representing the quality of the reception of the signals by said signal receiver channels,

**characterised in that** each of the switching schemas selects m antennae having their angular sectors comprised in a set of m+1 consecutive angular sectors, with at most two antennae from among the m selected antennae having opposite angular sectors.

2. Device according to claim 1, **characterised in that** the switching schema is
selected from a plurality of p switching schemas of
a switching matrix where $p < \frac{n!}{m!(n-m)!}$, according to a criterion representing the quality of the reception of the signals by said signal receiver channels.

3. Device according to claim 2, wherein the switching matrix comprises at least the n switching schemas each selecting m antennae having consecutive angular sectors.

4. Device according to claim 3, wherein the switching matrix further comprises the switching schemas each selecting m antennae having their angular sectors comprised in a set of m+2 consecutive angular sectors, the switching schemas selecting antennae having opposite angular sectors being excluded from said switching matrix.

5. Device according to one of the preceding claims, wherein the control means comprise additional means (351) to replace the switching schema selected by said control means by another predefined switching schema of the switching matrix, when the reception quality criterion for at least one of the signal receiver channels is no longer met.

6. Device according to one of the preceding claims wherein the angular sectors have identical sizes equal to 360/n degrees.

7. Device according to one of the preceding claims wherein the n antennae are formed by a multi-sector antenna with n angular sectors, each sector being able to be linked to a receiver channel via said switching means.

8. Device for transmitting and receiving signals in a system comprising:

- a reception device according to one of claims 1 to 7, and
- m signal transmission channels, each signal transmission channel being associated with a signal receiver channel,

wherein switching means are further able to associate with each transmission channel an antenna from among n antennae according to a switching schema selected by the control means, the switching schema being selected from a plurality of switching schemas of a switching matrix according to a criterion representing the quality of the reception of the signals by said associated signal receiver channels.

9. Device according to any one of the preceding claims **characterised in that** the system is a MIMO system.

FIG.1
(art antérieur)

FIG.2
(art antérieur)

FIG.3

FIG.4

EP 2 649 735 B1

FIG.5

FIG.6

FIG.7

FIG.8

13

EP 2 649 735 B1

FIG.9

FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6438389 B